# EUROPEAN PATENT APPLICATION

(11) **EP 1 641 062 A1**
(43) Date of publication of application: **29.03.2006**
(21) Application number: 04732762.2
(22) Date of filing: 13.05.2004
(51) Int. Cl.: H01M 4/86, H01M 4/88, H01M 8/02, H01M 8/12

(54) **SOLID OXIDE FUEL CELL AND METHOD FOR PRODUCING SAME**

(30) Priority: 14.05.2003 JP 2003136344
(71) Applicant: MATSUSHITA ELECTRIC INDUSTRIAL CO., LTD., Kadoma-shi, Osaka 571-8501 (JP)
(72) Inventor: SHIBUTANI, Satoshi, Hirakata-shi Osaka 573-0052 (JP); OKADA, Yukihiro, Katona-shi Osaka 576-0021 (JP); YUASA, Kohji, Hirakata-shi Osaka 573-1176 (JP); TANIGUCHI, Noboru, Osaka 558-0047 (JP); MINO, Norihisa, Osaka 530-0046 (JP); NIIKURA, Junji, Osaka 573-0157 (JP)
(74) Representative: Schorr, Frank Jürgen
(86) International application number: PCT/JP2004/006772
(87) International publication number: WO 2004/102704

(57) **Abstract**

The present invention provides a solid oxide fuel cell with superior power generation characteristics even at lower temperatures (for example, in a range of 200°C to 600°C and preferably in a range of 400°C to 600°C) and a method for manufacturing the same. The solid oxide fuel cell is such that the solid oxide fuel cell includes an anode, a cathode, and a first solid oxide held between the anode and the cathode, the anode includes metal particles (2), an anode catalyst (1), and ion conducting bodies (3), the anode catalyst (1) is attached to the surface of the metal particles (2), and the first solid oxide and the ion conducting bodies (3) have either one of an ionic conductivity that is selected from oxide ionic conductivity and hydrogen ionic conductivity.

## Description

### TECHNICAL FIELD

The present invention relates to solid oxide fuel cells and methods for manufacturing the same.

### BACKGROUND ART

Solid oxide fuel cells (SOFCs) are fuel cells using solid oxide having ionic conductivity as the electrolyte. Generally, yttria-stabilized zirconia (YSZ) is used as the solid oxide, and YSZ conducts oxide ions to generate electrical power. When YSZ is used as the electrolyte, the power generation temperature is usually at least 800°C.

The solid oxide, which is an electrolyte, is held by an anode and a cathode. A porous cermet made from a solid oxide such as YSZ and metal particles such as nickel generally is used as the anode. Furthermore, a conductive porous body made from a solid oxide such as YSZ and lanthanum manganite, for example, generally is used as the cathode. The electrodes have catalytic activity and the transfer of oxide ions (depending on the type of the electrolyte, the transfer of hydrogen ions) through the electrolyte is possible.

As described above, because operating temperatures of SOFCs are as high as at least 800°C, ceramics generally are used for the members that constitute the SOFC. However, ceramics are characterised by susceptibility to thermal stress and physical shock. Thus, various measures to lower the power generation temperatures of SOFCs to 600°C or less are being explored. If the power generation temperatures are 600°C or less, then it is possible to use metal such as stainless steel for the members that constitute the SOFCs, and it is possible to provide SOFCs with greater durability, and with superior operating characteristics.

However, merely lowering the power generation temperature decreases the power density of the cell. It seems that this is caused by a decrease in the ionic conductance of the electrolyte and a decrease in the catalytic activity of the electrodes due to the lowering of the power generation temperature. At present, the development of solid oxides that show high ionic conductance even at lower temperatures is advancing.

For example, a type of gadolinium doped cerium oxide (GDC) is disclosed in "Changrong Xia, et al. "Low-temperature SOFCs based on Gd_{0.1}Ce_{0.9}O_{1.95} fabricated by dry pressing", *Solid State Ionics,* (2001), vol. 144, p.249-255 (Reference A). This GDC is shown to have a high degree of ionic conductance (0.5Ω·cm² at 20 µm thickness) at a low temperature of about 600°C. In the above-cited literature, by using a porous cermet, in which nickel particles and the GDC are mixed, as the anode, an output power higher than that obtained by conventional porous cermets is obtained at a low temperature of about 600°C.

However, when a porous cermet in which nickel particles and solid oxide are mixed is used, the output power tends to drop significantly at temperatures lower than 600°C. It seems that a decrease in the catalytic activity is the main factor for this, and although many attempts have been made to improve the catalytic activity through the optimization of the porosity and the composition ratio of the anode, satisfactory results have not been obtained. As a substitute for nickel particles, a cermet mixed with platinum particles that have superior catalytic activity at low temperatures than the nickel particles has been considered, but because it is necessary to include a large quantity of expensive platinum in the cermet, there are issues regarding the cost.

### DISCLOSURE OF INVENTION

Therefore, by use of a new anode, it is an object of the present invention to provide a solid oxide fuel cell with superior power generation characteristics even at lower temperatures (for example, in a range of 200°C to 600°C and preferably in a range of 400°C to 600°C) and a method for manufacturing the same.

In order to achieve the above-described object, the solid oxide fuel cell of the present invention includes an anode, a cathode, and a first solid oxide held between the anode and the cathode, wherein the anode includes metal particles, an anode catalyst and ion conducting bodies, wherein the anode catalyst is attached to the surface of the metal particles and wherein the first solid oxide and the ion conducting bodies have either one of an ionic conductivity that is selected from oxide ionic conductivity and hydrogen ionic conductivity.

Furthermore, the solid oxide fuel cell of the present invention includes an anode, a cathode, and a first solid oxide held between the anode and the cathode, wherein the anode includes ion conducting bodies and a plurality of types of metal particles, whose range of particle diameter distribution differs from one another, wherein at least one type of metal particles, selected from the plurality of types of the metal particles, is attached to the surface of other metal particles, wherein the at least one type of metal particles attached to the surface is the anode catalyst, and wherein the first solid oxide and the ion conducting bodies have either one of an ionic conductivity that is selected from oxide ionic conductivity and hydrogen ionic conductivity.

Next, the present invention provides a method for manufacturing a solid oxide fuel cell comprising an anode containing an anode catalyst, a cathode, and a first solid oxide held between the anode and the cathode, the method comprising:
(i) a step of forming metal particles to which an element is attached, by adding the metal particles to a first solution that contains a compound of the element that becomes the anode catalyst, and then reducing the compound to deposit the element on the surface of the metal particles;
(ii) a step of forming a thin membrane that contains the metal particles and ion conducting bodies; and
(iii) a step of forming the anode containing the anode catalyst from the thin membrane, by disposing the thin membrane, the cathode, and the first solid oxide such that the first solid oxide is held between the thin membrane and the cathode, to form a laminated body, and heating the laminated body thus formed,
wherein the first solid oxide and the ion conducting bodies have either one of an ionic conductivity that is selected from oxide ionic conductivity and hydrogen ionic conductivity.

Furthermore, the present invention provides a method for manufacturing a solid oxide fuel cell including an anode containing an anode catalyst, a cathode, and a first solid oxide held between the anode and the cathode, the method comprising:
(I) a step of forming metal particles to which an element is attached by adding the metal particles to a solution that contains a compound of the element that becomes the anode catalyst, and then reducing the compound to deposit the element on the surface of the metal particles;
(II) a step of forming a thin membrane that contains the metal particles and ion conducting bodies;
(III) a step of forming the anode containing the anode catalyst from the thin membrane by heating the thin membrane; and
(IV) a step of laminating the anode, the cathode, and the first solid oxide such that the first solid oxide is held between the anode that is formed and the cathode,
wherein the first solid oxide and the ion conducting bodies have either one of an ionic conductivity that is selected from oxide ionic conductivity and hydrogen ionic conductivity.

### BRIEF EXPLANATION OF THE DRAWINGS

FIG. 1 is a cross-sectional view schematically showing an example of a solid oxide fuel cell of the present invention.

FIG. 2 is a diagram schematically showing an example of a structure of an anode included in a solid oxide fuel cell of the present invention.

FIG. 3 is a diagram schematically showing an example of a structure of an anode included in a conventional solid oxide fuel cell.

FIG. 4 is a diagram schematically showing a separate example of a structure of an anode included in a solid oxide fuel cell of the present invention.

FIG. 5A to FIG. 5D are process diagrams schematically showing an example of a method for manufacturing a solid oxide fuel cell of the present invention.

FIG. 6 is a diagram showing results of the power generation characteristics of a solid oxide fuel cell of the present invention and of a conventional solid oxide fuel cell measured in a working example.

FIG. 7 is a diagram showing results of the power generation characteristics of a solid oxide fuel cell of the present invention measured in a working example.

FIG. 8 is a diagram showing the change in the amount of Pt particles in solid oxide fuel cells used in a working example.

### BEST MODE FOR CARRYING OUT THE INVENTION

Embodiments of the present invention are described below with reference to the drawings. It should be noted that in the description of the embodiments, similar parts are given similar symbols, and duplicate description may be omitted.

First, a solid oxide fuel cell (also known below simply as "fuel cell") of the present invention is described.

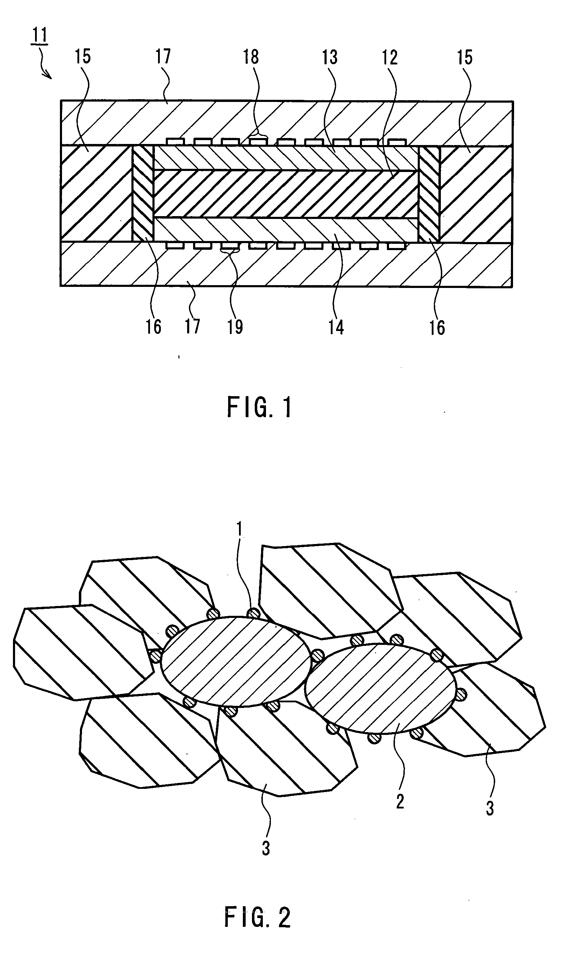

FIG. 1 is a cross-sectional view that schematically shows an example of the solid oxide fuel cell of the present invention. A solid oxide fuel cell 11 (fuel cell 11) shown in FIG. 1 includes an anode 13, a cathode 14, and a first solid oxide 12 held by the anode 13 and the cathode 14. Here, the anode 13 includes metal particles, an anode catalyst, and ion conducting bodies, and the anode catalyst is attached to the surface of the metal particles. Furthermore, the first solid oxide 12 and the ion conducting bodies included in the anode 13 have a type of ionic conductivity that is selected from one of oxide ionic conductivity and hydrogen ionic conductivity. By providing such a fuel cell 11, it is possible to provide a fuel cell with superior power generation characteristics even at low temperatures (for example, in a range of 200°C to 600°C and preferably in a range of 400°C to 600°C).

FIG. 2 shows an example of a structure of the anode 13 included in the fuel cell 11 of the present invention. The anode shown in FIG. 2 includes metal particles 2, an anode catalyst 1 and ion conducting bodies 3. The anode catalyst 1 is attached to the surface of the metal particles 2. In such an anode, deterioration of catalytic activity can be suppressed even at low temperatures. Therefore, by including an anode such as is shown in FIG. 2, the fuel cell 11 can be provided with superior power generation characteristics even at low temperatures. It should be noted that "attach" means that both bodies need only be in physical contact and does not necessarily require that the contacting faces of both bodies are chemically bonded. However, if the contacting faces of both bodies are chemically bonded, then the properties of the anode can be maintained with greater reliability. It also can be said that if the contacting faces of both bodies are chemically bonded, then the anode catalyst 1 is supported on the surface of the metal particles 2. Furthermore, in the example shown in FIG. 2, the anode catalyst 1 is only present on the surface of the metal particles 2, but the regions in which the anode catalyst 1 may be present are not limited to the surface of the metal particles 2 and they may be present in other regions.

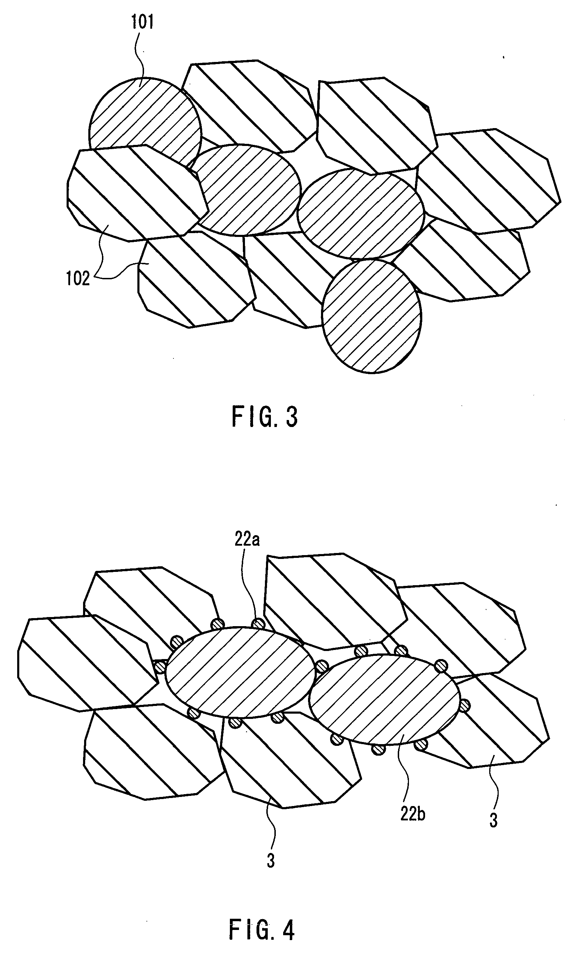

The structure of the anode 13 in the fuel cell 11 of the present invention is completely different from the structure of an anode in conventional solid oxide fuel cells. FIG. 3 shows an example of the structure of an anode in a conventional solid oxide fuel cell. The anode shown in FIG. 3 is a porous cermet containing metal particles 101 that function as the anode catalyst and solid oxides 102, which are ion conducting bodies. Nickel particles, platinum particles, or the like are used as the metal particles 101, for example. The metal particles 101 also function as conductive bodies, and in order to form conductive pathways in the anode and also in order to form the cermet in conjunction with the solid oxides 102, the metal particles 101 need to have a certain size (an average particle diameter in the order of at least 0.5 µm, for example). Furthermore, the percentage of the metal particles 101 in the anode also needs to be at least a certain value (at least about 30 vol%, for example). Therefore, for reasons such as precious metal particles suppressing the decrease of catalytic activity at low temperatures, for example, an increase in manufacturing cost may be expected if precious metal particles such as platinum particles are used as the metal particles 101.

As opposed to this, in the anode 13 in the fuel cell 11 of the present invention, the anode catalyst 1 and the metal particles 2 that function as the conducting bodies are independent of each other as shown in FIG. 2. Thus, the size of the anode catalyst 1 and the percentage of the anode catalyst in the anode 13 can be set with more flexibility. Therefore, the size of the anode catalyst 1 can be smaller than conventional anodes (metal particles in conventional anodes), for example, and the decrease of catalytic activity can be suppressed even when power is generated at low temperatures. Furthermore, even if precious metals such as platinum are used as the anode catalyst 1, for example, then because the metal particles 2 functioning as the conducting bodies do not necessarily contain the precious metals, manufacturing at a lower cost is possible. Alternatively, by controlling the distribution of the anode catalyst 1 on the surface of the metal particles 2, for example, it is also possible to suppress the decrease of anode properties due to sintering of the anode catalyst 1, for example. It should be noted that in the fuel cell 11 of the present invention, not only the anode catalyst 1 but also the metal particles 2 may have the role as the anode catalyst (or have anode catalytic activity).

Furthermore, the anode 13 may include a plurality of types of anode catalyst 1 (a plurality of anode catalysts 1 whose compositions differ from each another, for example). For example, by providing the anode 13 to include a plurality of anode catalyst 1 whose catalytic activity peaks occur at different regions of temperatures, it is possible to provide a fuel cell with superior power generation characteristics over a wider region of temperatures. Then, when the anode catalyst 1 and the metal particles 2 are configured independently of each other as in the anode 13 of the fuel cell of the present invention, the type of the anode catalyst 1 may be selected with more flexibility.

In the fuel cell of the present invention, the composition of the metal particles 2 and the composition of the anode catalyst 1 may be different. More specifically, elements (such as metal elements) included in the metal particles 2 and elements (such as metal elements) included in the anode catalyst 1 may be different, for example. It is difficult for anodes in conventional fuel cells to have such a configuration. For example, in the fuel cell of the present invention, it is possible to achieve a reduction in manufacturing costs by using an anode catalyst 1 that includes a precious metal element to suppress the decrease of catalytic activity at low temperatures while using metal particles 2 that do not include precious metal elements.

Provided that elements can withstand the internal environment of the anode 13 during power generation, there is no particular limitation on the composition of the anode catalyst 1 (elements included in the anode catalyst 1). However, due to the principle of fuel cell power generation, if the first solid oxide 12 and the ion conducting bodies 3 have oxide ionic conductivity, then it is necessary to have catalytic activity for the reaction between fuel and oxide ions. Furthermore, if the first solid oxide 12 and the ion conducting bodies 3 have hydrogen ionic conductivity, then it is necessary to have catalytic activity for the reaction generating hydrogen ions from the fuel. For example, the anode catalyst 1 may include transition elements. Then, the anode catalyst 1 may contain a single transition element in elemental form or as an alloy. It should be noted that in the present specification, "alloy" is a concept that also includes intermetallic compounds, and solid solutions, for example.

In the fuel cell of the present invention, the anode catalyst 1 may include precious metal elements. More specifically, the anode catalyst 1 may include at least one element selected from Pt, Ir, Rh, Pd, Ag, and Au, for example. The decrease of catalytic activity at low temperatures can be suppressed, and a fuel cell can be provided that has superior power generation characteristics even at low temperatures.

In the fuel cell of the present invention, the anode catalyst 1 may include at least one alloy selected from PtRu, PtSn, PtRe, PtOs, PtW, IrRu, IrSn, and IrW. Such an alloy has particularly high catalytic activity and a fuel cell can be provided with more superior power generation characteristics. It should be noted that there is no particular limitation to the composition ratio of the elements in the alloy described above.

Alternatively, in the fuel cell of the present invention, the anode catalyst 1 may include an oxide of at least one type selected from tungsten oxide, copper oxides, and zinc oxides, for example. In a similar manner, the decrease of catalytic activity at low temperatures can be suppressed, and a fuel cell can be provided that that has superior power generation characteristics even at low temperatures.

There is no particular limitation to the size of the anode catalyst 1, and the average particle diameter may be in a range of 2 nm to 400 nm, for example, and is preferably in a range of 2 nm to 20 nm. By providing the anode catalyst 1 whose average particle diameter is in the foregoing range (2 nm to 400 nm), the decrease of catalytic activity at low temperatures can be suppressed further. Furthermore, if the average particle diameter is in a range of 2 nm to 20 nm in particular, then because the amount of the anode catalyst 1 used in the entire anode 13 can be significantly reduced, a reduction in manufacturing cost can be achieved. There is also no particular limitation on the specific percentage (also referred to as the amount of anode catalyst used in the anode 13) of the anode catalyst 1 included in the anode 13, and the weight percent may be in a range of 0.01 wt% to 10 wt%, for example, and is preferably in a range of 0.1 wt% to 3 wt%.

There is no particular limitation on the form of the anode catalyst 1 attached to the surface of the metal particles 2. Particulate anode catalyst 1 may be attached to the surface of the metal particles 2, for example. Then, it is not necessary that the anode catalyst 1 covers the entire surface of the metal particles 2, and the degree to which the anode catalyst 1 covers the surface of the metal particles 2 may be set freely in accordance with the characteristics required for the fuel cell.

Provided that the elements can withstand the internal environment of the anode during power generation and the metal particles 2 are conductive, there is no particular limitation on the composition of the metal particles 2 (elements included in the metal particles 2). Specifically, the metal particles 2 may include at least one type of the element selected from Ni, Co, and Fe, for example. More specifically, for example, the metal particles 2 may be a metal such as elemental nickel (Ni), elemental cobalt (Co), elemental iron (Fe), NiFe alloy, NiCo alloy, NiFeCo alloy, or the like. By providing such a configuration, it is possible to provide a fuel cell that has more superior power generation characteristics at low temperatures. Although the specific reason why the fuel cell has more superior power generation characteristics is unclear, the reason seems to be that hydrogen molecules are easily adsorbed onto the surface of the metal particles 2 that include Ni, Co, or Fe at low temperatures (for example, in a range of 200°C to 600°C and preferably in a range of 400°C to 600°C range) and also when the hydrogen molecules become hydrogen atoms by anode catalysis, the hydrogen atoms are more likely to move easily across the surface of the metal particles 2.

There is no particular limitation to the size of the metal particles, and the average particle diameter may be in a range of 300 nm to 10 µm, for example, and is preferably in a range of 500 nm to 2 µm. In such a range, good conductive pathways can be formed in the anode. Furthermore, in the fuel cell of the present invention, it is preferable that the average particle diameter of the metal particles 2 is larger than the average particle diameter of the anode catalyst 1 because the anode 13 has a configuration in which the anode catalyst 1 is attached to the surface of the metal particles 2.

There is no particular limitation to the percentage of the metal particles 2 included in the anode 13, and the volume percent may be in a range of 25 vol% to 50 vol%, for example, and is preferably in a range of 30 vol% and 40 vol%. In such a range, good conductive pathways can be formed in the anode. It should be noted that there is no particular limitation on the shape of the metal particles 2.

The ion conducting bodies 3 have a type of ionic conductivity that is selected from one of oxide ionic conductivity and hydrogen ionic conductivity, and provided that the ion conducting bodies 3 have the same ionic conductivity as the first solid oxide 12, then there is no particular limitation to the composition, the structure, and the shape, for example, of the ion conducting bodies 3. For example, the ion conductive bodies 3 may be a second solid oxide having the same ionic conductivity as the first solid oxide 12. Then, the composition of the first solid oxides 12 and the composition of the second solid oxides may be identical to or they may be different from one another.

As described above, with the fuel cell of the present invention, it is possible to provide a fuel cell that has superior power generation characteristics at low temperatures. In conventional fuel cells, in order to suppress damage due to a thermal stress, for example, it was common to make the composition of solid oxide included in the anode, and the composition of the first solid oxide the same (if the composition is the same, then the thermal expansion coefficient is also the same). In the fuel cell of the present invention, since the power generation temperatures can be set to low temperatures, the composition of the first solid oxide 12 and the composition of the second solid oxide can be selected with more flexibility in accordance with the necessary power generation characteristics. As a specific example, the composition of the first solid oxide 12 may be selected to give a solid oxide that has superior film-forming characteristics such as density when film-forming, for example, and the composition of the second solid oxide may be selected as a solid oxide that has superior ionic conductivity, for example.

Provided that the second solid oxide can withstand the internal environment of the anode during power generation and has a type of ionic conductivity that is selected from one of oxide ionic conductivity and hydrogen ionic conductivity, there is no particular limitation on the composition of the second solid oxide. Solid oxides that include Zr or Ce may be used, for example. In particular, it is preferable to use solid oxides that include Ce. Thus, a fuel cell can be provided with more superior power generation characteristics at low temperatures.

More specifically, the second solid oxide may have a composition expressed by the formula Ce₁₋ₓMₓO_{2-α}, for example. M is at least one element selected from Gd, La, and Sm, and x and α are values satisfying the relationship 0 < x < 1 and the relationship 0 ≤ α < 2. In particular, it is preferable that x and α satisfy the relationships 0 < x < 0.4 and 0 ≤ α < 1. It should be noted that α is a value reflecting the loss of oxygen (likewise with the following).

Furthermore, the second solid oxide may have a composition expressed by the formula Ba(Zr_{1-x'}Ce_{x'})_{1-y'}Gd_{y'}O_{3-α}, for example. Where, x', y', and α are values satisfying the relationship 0 < x' < 1, the relationship 0 < y' < 1, and the relationship 0 ≤ α < 3. In particular, it is preferable that x', y', and α satisfy the relationships 0.1 ≤ x' < 1, 0.1 ≤ y' ≤ 0.3, and 0 ≤ α < 1.

Furthermore, the second solid oxide may have a composition expressed by the formula La_{x"}Sr_{1-x"}Ga_{y"}Mg_{1-y"-z}C0_{z}O₃-α, for example. x", y", z, and α are values satisfying the relationship 0 < x" < 1, the relationship 0 < y" < 1, the relationship 0 < z < 1, and the relationship 0 < α < 3.

By providing such a configuration, it is possible to provide a fuel cell that has more superior power generation characteristics at low temperatures.

There is no particular limitation to the size of the second solid oxide, and the average particle diameter may be in a range of 0.1 µm to 5 µm, for example, and is preferably in a range of 0.2 µm to 1 µm. Furthermore, there is no particular limitation to the percentage of the second solid oxide included in the anode 13, and the volume percent may be in a range of 20 vol% to 60 vol%, for example, and is preferably in a range of 25 vol% and 50 vol%. There is no particular limitation on the shape of the second solid oxide.

Provided that the anode 13 includes the above-noted ion conducting bodies (the second solid oxide, for example), the anode catalyst 1, and the metal particles 2, and the compositions satisfy the above-noted relationships, there is no particular limitation to the structure, the configuration, and the shape, for example, of the anode 13. For example, if the anode 13 is plate - shaped as shown in FIG. 1, then the thickness of the anode is in a range of 10 µm to 500 µm.

Provided that the cathode 14 has cathode catalytic activity in the power generation temperature region of the fuel cell 11, and conductivity, there is no particular limitation on the structure, the configuration, and the shape, for example, of the cathode 14. Here, "cathode catalytic activity" means catalytic activity for the reaction generating oxide ions from an oxidizing agent (such as air) in the case in which the first solid oxide 12 and the ion conducting bodies 3 have oxide ionic conductivity. If the first solid oxide 12 and the ion conducting bodies 3 have hydrogen ionic conductivity, then cathode catalytic activity means a catalytic activity for the reaction between hydrogen ions and the oxidizing agent.

An electrode used in general solid oxide fuel cells may be used as the cathode 14, for example. More specifically, LaMnO₃, La_{0.7}Sr_{0.3}MnO₃, Sm_{0.5}Sr_{0.5}CoO₃, or the like may be used, for example. The cathode 14 may also include an oxide with the same composition as the first solid oxide 12. If the cathode 14 is plate - shaped as shown in FIG. 1, then the thickness of the cathode is in a range of 500 µm to 3 mm, for example.

Provided that the first solid oxide 12 has a type of ionic conductivity that is selected from one of oxide ionic conductivity and hydrogen ionic conductivity, there is no particular limitation on the first solid oxide 12, which is an electrolyte held by the anode 13 and the cathode 14. For example, a solid oxide used as an electrolyte in general solid oxide fuel cells may be used. ZrO₂·Y₂O₃ (8%) or ZrO₂·CaO(12%) may be used as the solid oxide having oxide ionic conductivity, for example. Furthermore, the above-noted Ce₁₋ₓMₓO_{2-α} or Ba(Zr_{1-x'}Ce_{x'})_{1-y'}M_{y'}O_{3-α} may be used as the solid oxide having hydrogen ionic conductivity, for example. If the first solid electrolyte 12 is plate - shaped as shown in FIG. 1, then the thickness of the first solid electrolyte is in a range of 1 µm to 100 µm, for example.

Other parts in the fuel cell of the present invention are described.

In the fuel cell 11 shown in FIG. 1, a laminated body of the first solid oxide 12, the anode 13, and the cathode 14 is inserted into a through hole formed in a substrate 15. Gaps between the substrate 15 and the laminated body are sealed by seal glasses 16. The substrate 15, the laminated body, and the seal glasses 16 are held by a pair of separators 17. An anode pathway 18 is configured in one of the separators 17, and the separator 17 in which the anode pathway 18 is configured is arranged so as to make contact with the anode 13. Furthermore, a cathode pathway 19 is configured in the other separator 17, and the separator 17 in which the cathode pathway 19 is configured, is arranged to make contact with the cathode 14. In such a fuel cell 11, power is generated by providing fuel (such as hydrogen, methanol, dimethyl ether, methane, ethane, propane, butane, or the like) to the anode pathway 18 and an oxidizing agent (such as air, oxygen, gas containing oxygen, or the like) to the cathode pathway 19.

Provided that the material used for the separators 17 have conductivity, there is no particular limitation to the material. Materials such as stainless steel, glassy carbon, or the like may be used. There is also no particular limitation to the shape of the anode pathway 18 and the cathode pathway 19 that are configured by the separators 17, and it may be set freely in accordance with the necessary power generation characteristics. When the separators 17 are plate - shaped as shown in FIG. 1, then the thickness of the separators is in a range of 500 µm to 3 mm, for example.

There is no particular limitation to the material used for the substrate 5. Materials such as alumina, zirconia, or the like may be used. Furthermore, if the substrate is electrically insulating, then it is easier to maintain insulation between the pair of separators 17. In addition, there is also no particular limitation on the material used for the seal glass 16. For example, the material used in general solid oxide fuel cells may be used.

It should be noted that the fuel cell 11 shown in FIG. 1 is a fuel cell that is generally known as the flat plate - type fuel cell. The fuel cell 11 shown in FIG. 1 can have a plurality of laminations, and, in this case, the output voltage of the entire fuel cell can be increased. Furthermore, the fuel cell of the present invention is not limited to the flat plate - type fuel cell as shown in FIG. 1. The fuel cell of the present invention also may be a fuel cell of another structure (what is known as a cylindrical-type fuel cell, for example). A similar effect can be obtained.

As described above, with the fuel cell 11 of the present invention, it is possible to provide a fuel cell with more superior power generation characteristics at low temperatures. Thus, it is also possible to provide a fuel cell that has improved start-up characteristics from an ambient surrounding temperature. Further, since the fuel cell of the present invention can be provided with fewer parts, such as thermal insulation, than conventional fuel cells, it is also possible to provide a smaller fuel cell. Moreover, metal such as stainless steel can be used as members for configuring the fuel cell, and if metal is used for the parts described above, then it is possible to further improve the resistance of the cell to thermal stress during start-up and during output variations, for example. That is; it is also possible to provide a fuel cell that has superior durability and/or operating characteristics. It should be noted that the above-noted members may be members such as the separators shown in FIG. 1, gaskets for sealing the fuel cell itself or for sealing members included in the fuel cell, and a manifold for providing fuel or an oxidizing agent to a fuel cell or for discharging unused fuel or oxidizing agent from the fuel cell, or water, carbon dioxide, or the like generated by a reaction. Furthermore, there is no particular limitation on the metal used for the members, and it may be set in accordance with the type of part, power generation temperature, and the like. For example, stainless steel may be used.

The fuel cell of the present invention can be embodied as follows.

That is, to say the fuel cell 11 of the present invention includes an anode 13, a cathode 14, and a first solid oxide 12 held by the anode 13 and the cathode 14 as shown in FIG. 1. As shown in FIG. 4, the anode 13 includes ion conducting bodies 3 and a plurality of varieties of metal particles 22 in which the range of particle diameter is distributed differently from one another. Here, at least one type of metal particles 22a, selected from the plurality of varieties of metal particles, is attached to the surface of other metal particles 22b. At least one type of the metal particles 22a attached to the surfaces of other metal particles 22b is an anode catalyst (having anode catalytic activity). Other metal particles 22b also serve as a conductive pathway in the anode. The first solid oxide 12 and the ion conducting bodies 3 have a type of ionic conductivity that is selected from one of oxide ionic conductivity and hydrogen ionic conductivity.

"Including a plurality of varieties of metal particles 22 whose range of particle diameter distribution differs from one another" means, for example, to include a plurality of metal particles that have mutually different average particle diameters. For example, in the example shown in FIG. 4, it can be said to include two varieties of metal particles: the metal particles 22b whose average particle diameter is relatively large and the metal particles 22a whose average particle diameter is relatively small. Among the plurality of varieties of metal particles, other properties characterizing the metal particles such as composition may be different. For example, it can also be said to include two varieties of metal particles 22a and 22b whose average particle diameter and composition differ from each other. More specifically, the metal particles 22a may be similar to the anode catalyst 1 described above, and the metal particles 22b may be similar to the metal particles 2 described above. In addition, it is likewise for the ion conducting bodies 3.

Here, it is preferable that, among the plurality of varieties of metal particles, the average particle diameter of at least one type of metal particles is smaller than the average particle diameter of other metal particles. Since at least one type of metal particle is the anode catalyst, by reducing the average particle diameter relative to other metal particles, the decrease in catalytic activity at low temperatures can be suppressed and the amount used as the anode catalyst can be reduced. More specifically, the average particle diameter of at least one type of metal particle may be similar to the average particle diameter of the anode catalyst 1 described above, for example. More specifically, there is no particular limitation on the size of the at least one type of metal particles 22a, and the average particle diameter may be in a range of 2 nm to 400 nm, for example, and is preferably in a range of 2 nm to 20 nm. Similar effects to the effects described above in the description of the average particle diameter of the anode catalyst 1, can be obtained. It should be noted that other metal particles also may have the role as the anode catalyst.

Next, a method for manufacturing the fuel cell of the present invention is described. The fuel cell of the present invention can be manufactured by a method shown below, for example.

The method for manufacturing the solid oxide fuel cell of the present invention includes an anode containing an anode catalyst, a cathode, and a first solid oxide held between the anode and the cathode, the method comprising:
(i) a step of forming metal particles to which an element is attached, by adding the metal particles to a first solution that contains a compound of the element that becomes the anode catalyst, and then reducing the compound to deposit the element on the surface of the metal particles;
(ii) a step of forming a thin membrane that contains the metal particles and ion conducting bodies; and
(iii) a step of forming the anode containing the anode catalyst from the thin membrane, by disposing the thin membrane, the cathode, and the first solid oxide such that the first solid oxide is held between the thin membrane and the cathode, to form a laminated body, and heating the laminated body thus formed. Here, the first solid oxide and the ion conducting bodies have either one of an ionic conductivity that is selected from oxide ionic conductivity and hydrogen ionic conductivity.

By providing such a manufacturing method, it is possible to provide a fuel cell with superior power generation characteristics at low temperature. More specifically, according to the step (i), it is possible to increase the percentage of anode catalyst that is dispersed and attached to the surface of the metal particles over the case in which the anode catalyst and the metal particles are just physically mixed. Thus, because it is possible to suppress the rate at which the anode catalyst is separated from the metal particles (that is to say, anode catalyst whose functionality as a catalyst is low) are generated, it is possible to suppress the reduction of catalytic activity at low temperatures, and provide an anode in which the amount of catalyst used is reduced. That is to say, compared to a case in which a cermet is used as the anode, it is possible to obtain a fuel cell that has superior power generation characteristics at low temperatures and in which manufacturing cost is reduced.

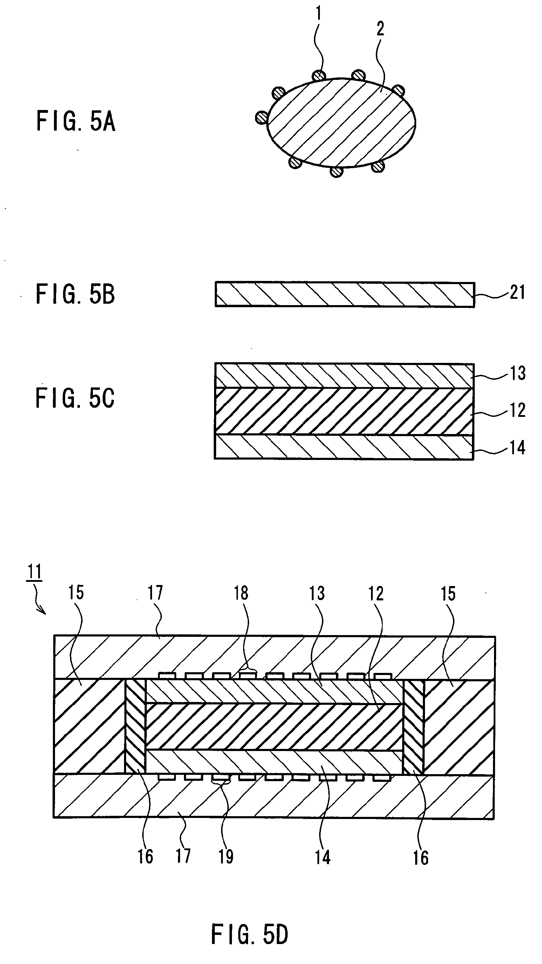

FIG. 5A to FIG. 5D show an example of a method for manufacturing the solid oxide fuel cell of the present invention.

First, by adding the metal particles 2 to a first solution containing chemical compounds of the element that becomes the anode catalyst 1, then reducing the compound, the element that become the anode catalyst 1 is deposited on the surface of the metal particles 2, forming the metal particles 2 on whose surface the anode catalyst 1 is attached, as shown in FIG. 5A (step i).

Next, a thin membrane 21 containing the metal particles 2 to whose surface the anode catalyst 1 is attached and ion conducting bodies is formed, as shown in FIG. 5B (step ii).

Next, as shown in FIG. 5C, using a cathode 14 that is formed separately and a first solid oxide 12, a thin membrane 21, the cathode 14 and the first solid oxide 12 are disposed such that the solid oxide 12 is held by the thin membrane 21 and the cathode 14 to form a laminated body, and an anode 13 is formed from the thin film 21 by heating the laminated body that was formed (step iii).

Thus, it is possible to form a solid oxide fuel cell 11 containing the anode 13 that includes the anode catalyst, the cathode 14, and the first solid oxide 12 held by the anode 13 and the cathode 14 (FIG. 5D).

There is no particular limitation on the method for forming the cathode 14 and the first solid oxide 12. A usual method for manufacturing solid oxide fuel cells may be used, the cathode and the first solid oxide may be formed separately, or a laminated body of the cathode and the first solid oxide may be formed. Specific examples are described later in the working examples (and likewise for the specific examples in the following steps).

In the step (i), provided that the solution can be prepared, there is no particular limitation on the compound of element that becomes the anode catalyst. For example, at least one type of compound selected from chloroplatinic acid, ruthenium chloride, tin acetate, tungstic acid, sodium hexachloroiridate, rhodium chloride, palladium nitrate, silver acetate and chloroauric acid may be used. If one type of compound is used, then a single-element anode catalyst can be obtained. Furthermore, if a plurality of compounds is used, an alloy anode catalyst can be obtained. Anode catalyst containing platinum (Pt) can be obtained from chloroplatinic acid, for example. In a similar manner, ruthenium (Ru) from ruthenium chloride, tin (Sn) from tin acetate, tungsten (W) from tungstic acid, iridium (Ir) from sodium hexachloroiridate, rhodium (Rh) from rhodium chloride, palladium (Pd) from palladium nitrate, silver (Ag) from silver acetate and gold (Au) from chloroauric acid can be obtained.

The concentration of the compound in the solution containing the compound of the element that becomes the anode catalyst is preferably in a range of 0.005 mol/L to 0.5 mol/L. Water or ethanol or the like may be used for the solvent of the solution, for example, and sodium hydroxide or potassium hydroxide or the like may also be added as required. Furthermore, the pH of the solution containing the compound also may be adjusted as required. For example, when an aqueous solution of chloroplatinic acid is used, it is preferable to adjust the pH to approximately 5 by adding a solution such as sodium hydroxide.

In the step (i), there is no particular limitation on the method for adding the metal particles to the solution containing the compound. The metal particles and the solution simply may be mixed, for example. Furthermore, the method for reducing the compound may be accomplished by adding compounds such as a hydrogen peroxide solution, an acid (such as acetic acid), or an alkali (such as sodium hydroxide and potassium hydroxide), to the solution containing the compound and the metal particles, for example. By reducing the compound in the solution, it is possible to form the metal particles to whose surface the anode catalyst is attached.

In the step (ii), there is no particular limitation on the method for forming the thin membrane 21 containing the metal particles and the ion conducting bodies. For example, a metal fiber mesh may be formed by dipping. Alternatively, the thin membrane may be formed using any method such as a printing method on any substrate. In this case, the substrate may be separated from the thin membrane at any time. Furthermore, a metal fiber mesh, for example, may also be added to the thin membrane as a conductive material as required. It should be noted that the thickness of the thin membrane that is formed may be of the thickness required of it as an anode, and if the anode 13 is plate - shaped as shown in FIG. 5D, then it may be in a range of 10 µm to 500 µm, for example.

The ion conducting bodies added to the thin membrane may be a second solid oxide, for example, as described in the fuel cell of the present invention.

In the step (iii), there is no particular limitation on the method for forming the laminated body. It simply may be laminated, for example. Furthermore, the laminated body may be pressed as required and heating may be used in conjunction with the pressing.

The heating in the step (iii) may be performed in an air atmosphere below the melting points of the anode catalyst and the metal particles, for example. More specifically, the heating may be performed in a range of 950°C to 1400°C, for example. The heating time is in a range of 30 to 180 minutes, for example. By heating, the anode 13 is formed from the thin membrane 21, and a fuel cell of the present invention can be obtained.

Provided that elements can withstand the internal environment of the anode during power generation and the metal particles 2 have conductivity, there is no particular limitation on the composition of the metal particles 2 (elements included in the metal particle 2) as described above. Specifically, the metal particles 2 may include at least one type of the element selected from Ni, Co, and Fe, for example. More specifically, the metal particles 2 may be metals such as elemental nickel (Ni), cobalt (Co), iron (Fe), NiFe alloy, NiCo alloy and NiFeCo alloy, for example. By providing such a configuration, it is possible to obtain a fuel cell that has more superior power generation characteristics at low temperatures. The specific reason why the fuel cell obtained has more superior power generation characteristics is as described above.

In the manufacturing method of the present invention, if the ion conducting bodies are the second solid oxide, then the step (ii) may include a step (a) of forming a thin membrane containing the metal particles and the second solid oxide by adding the metal particles to a second solution containing the compounds of elements that become the second solid oxide and removing the solvent of the second solution, and then performing heating.

In the step (a), provided that the solution can be prepared, there is no particular limitation on the chemical compounds of elements that become the second solid oxide. For example, at least one type selected from cerium acetate, lanthanum chloride, samarium chloride, barium acetate, zirconium sulfate, and gadolinium chloride may be used. If a plurality of varieties of compounds is used, then the percentage of the compounds in the solution may be set in accordance with the composition (the composition ratio) required for the second solid oxide.

The concentration of the chemical compound in the solution containing the compound of elements that become the second solid oxide is in a range of 0.005 mol/L to 1 mol/L, for example. Water may be used for the solvent of the solution, for example. Furthermore, in the step (a), there is no particular limitation to the method for adding the metal particles, to whose surface the anode catalyst is attached, to the solution containing the compound. For example, the metal particles and the solution simply may be mixed. Furthermore, there is no particular limitation on the method for removing the solvent (moisture, if the solution is an aqueous solution).

The heating in the step (a) may, for example, be performed in an air atmosphere in a range of 800°C to 1000°C. The heating time is in a range of 30 to 180 minutes, for example. By heating, the thin membrane 21 containing the second solid oxide and the metal particles can be formed.

In the manufacturing method of the present invention, as a substitute for the step (iii), it is possible to include a step (III) of forming an anode that contains the anode catalyst from a thin membrane by heating the thin membrane, and a step (IV) of laminating the anode, a cathode, and a first solid oxide so as to hold the first solid oxide between the anode formed and the cathode. Even by also providing such a manufacturing method, it is possible to obtain a solid oxide fuel cell with superior power generation characteristics at low temperatures. In this case, the heating in the step (III) may be carried out in a similar manner to the heating in the step (iii). Furthermore, in the step (IV), the method for laminating the parts so as to hold the first solid oxide by the anode and the cathode may be carried out in a similar manner to the method for forming the laminated body in the step (iii).

It should be noted that, in the manufacturing method of the present invention, the material described above in the fuel cell of the present invention may be used for members such as the cathode catalysts, the metal particles, the first solid oxide, the ion conducting bodies, the second solid oxide and the separators.

### Working Examples

The present invention is explained in further detail below using the working examples. It should be noted that the present invention is not limited to the working examples shown below.

In the working examples, fuel cells were fabricated (sample 1 to sample 20) using the methods shown below and power generation characteristics (power generation temperature dependence) of each fuel cell were evaluated. First, a method for fabricating a sample is shown. It should be noted that sample 20 is a conventional fuel cell and is a comparative example.

### Sample 1

First, a laminated body of a cathode and a first solid oxide was formed.

First, a paste containing LaMnO₃ particles with an average particle diameter of 5 µm or less, Ce_{0.9}Gd_{0.1}O₂ particles with an average particle diameter of 5 µm or less, and carbon powder with an average particle diameter of 10 µm (manufactured by Nippon Carbon Co., Ltd.) was made up by mixing the materials noted above, and further adding propylene glycol and mixing. Next, a dry membrane with a thickness of 1 mm was formed by coating the paste onto a silica glass substrate using a printing method and heating the plate (at 120°C, for 60 minutes). Next, the LaMnO₃ particles and the Ce_{0.9}Gd_{0.1}O₂ particles were sintered by heating (at 1350°C, for 60 minutes) in an air atmosphere, and the cathode (LaMnO₃ /Ce_{0.9}d_{0.1}O₂ particle composite porous membrane, average pore diameter of 10 µm) with a thickness of 1 mm was formed by separating the cathode from the silica glass substrate. At this point the carbon powder was burnt off by oxidation. Continuing, the Ce_{0.9}Gd_{0.1}O₂ dense membrane (thickness 10 µm), which is the first solid electrolyte, was formed by sputtering on the cathode that was formed, and a laminated body of the cathode and the first solid oxide were formed. At this point, a Ce_{0.9}Gd_{0.1}O₂ sintered body was used as the target of the sputtering.

Aside from the laminated body of the cathode and the first solid oxide, a thin membrane containing the anode catalyst, a second solid oxide, and metal particles was fabricated.

First, an aqueous solution of sodium hydroxide was added to an aqueous solution of chloroplatinic acid (concentration 0.02 mol/L, manufactured by Tanaka Kikinzoku Kogyo K. K.) to adjust the pH to 5. Next, by adding Ni particles with an average particle diameter of 1 µm as the metal particles, after which reduction was carried out (hydrogen peroxide is added) to form the metal particles, onto which Pt particles with an average particle diameter of 5 nm were attached, as the anode catalyst. It should be noted that attachment of the Pt particles onto the Ni particles, and the average particle size of the attached Pt particles were confirmed by analytical methods such as scanning electron microscopy (SEM), transmission electron microscopy (TEM) and X-ray diffraction (XRD).

Next, the Ni particles, the Ce_{0.9}Gd_{0.1}O₂ particles with an average particle diameter of 1 µm and carbon powder with an average particle diameter of 10 µm (manufactured by Nippon Carbon Co., Ltd.) were mixed in a weight ratio of 1: 1.37: 0.15, and propylene glycol further added, and by mixing, slurry containing the above materials was fabricated. A Ni mesh with an average thickness of 260 µm made from a wire with an average wire diameter of 130 µm was immersed and removed from the slurry to form a membrane of the slurry on the Ni mesh. Next, by heating the entire body (at 120°C, for 60 minutes), a dry membrane (thickness 3 mm) of 30 vol% Ni particles, 50 vol% Ce_{0.9}Gd_{0.1}O₂ particles and 20 vol% carbon powder was formed.

The thin membrane thus formed was cut, after which the thin membrane was disposed on the first solid oxide, of the laminated body of the separately formed cathode and the first solid oxide. Next, by heating (at 900°C, for 1 hour) in air after lightly pressing to burn off the carbon powder in the dry membrane by oxidation and sinter the Ni particles and the Ce_{0.9}Gd_{0.1}O₂ particles, an anode (Ce_{0.9}Gd_{0.1}O₂ particles / Pt - attached Ni particles composite porous membrane, average pore diameter of 10 µm) with a thickness of 0.3 mm was formed. That is to say, the laminated body (membrane electrode assembly) in which the first solid oxide is held by the anode and the cathode was formed.

The fuel cell shown in FIG. 1 was fabricated using the laminated body thus formed. Alumina was used for the substrate and stainless steel was used for the separators. Furthermore, the size of the laminated body viewed from the direction perpendicular to the membrane face of the laminated body is 20 mm x 20 mm.

### Sample 2.

A fuel cell as shown in FIG. 1 was fabricated in a similar manner to that of sample 1.

However, an aqueous solution of a chloroplatinic acid - ruthenium chloride (manufactured by Kanto Kagaku) (atomic composition ratio of Pt to Ru is 5:5) was used instead of the aqueous solution of chloroplatinic acid. The aqueous solution of chloroplatinic acid ― ruthenium chloride was prepared by adding an aqueous solution of sodium hydroxide to an aqueous solution of chloroplatinic acid (concentration 0.02 mol/L) to adjust the pH to 5, after which an aqueous solution of ruthenium chloride (concentration 0.02 mol/L) was added. It should be noted that in a similar manner to that of sample 1, analytical methods such as SEM, TEM, and XRD confirmed that PtRu alloy particles with an average particle diameter of 20 nm were attached to the Ni particles, which are the metal particles.

### Sample 3

A fuel cell as shown in FIG. 1 was fabricated in a similar manner to that of sample 1.

However, an aqueous solution of a chloroplatinic acid - tin acetate (manufactured by Kanto Kagaku) (atomic composition ratio of Pt to Sn is 5:5) was used instead of the aqueous solution chloroplatinic acid. The aqueous solution of chloroplatinic acid - tin acetate was prepared by adding an aqueous solution of sodium hydroxide to an aqueous solution of chloroplatinic acid (concentration 0.02 mol/L) to adjust the pH to 5, after which an aqueous solution of tin acetate (concentration 0.02 mol/L) was added. It should be noted that in a similar manner to that of sample 1, analytical methods such as SEM, TEM, and XRD confirmed that PtSn alloy particles with an average particle diameter of 20 nm were attached to the Ni particles, which are the metal particles.

### Sample 4

A fuel cell as shown in FIG. 1 was fabricated in a similar manner to that of sample 1.

However, an aqueous solution of a chloroplatinic acid - tungstic acid (manufactured by Kanto Kagaku) (atomic composition ratio of Pt to W is 5:5) was used instead of the aqueous solution of chloroplatinic acid. The aqueous solution of chloroplatinic acid - tungstic acid was prepared by adding an aqueous solution of sodium hydroxide to an aqueous solution of chloroplatinic acid (concentration 0.02 mol/L) to adjust the pH to 5, after which an aqueous solution of tungstic acid (concentration 0.02 mol/L) was added. It should be noted that in a similar manner to that of sample 1, analytical methods such as SEM, TEM, and XRD confirmed that PtW alloy particles with an average particle diameter of 20 nm were attached to the Ni particles, which are the metal particles.

### Sample 5

A fuel cell as shown in FIG. 1 was fabricated in a similar manner to that of sample 1.

However, an aqueous solution of sodium hexachloroiridate (manufactured by Kanto Kagaku) was used instead of the aqueous solution of chloroplatinic acid. Ir - attached Ni particles were obtained by adding an aqueous solution of sodium hydroxide to an aqueous solution of sodium hexachloroiridate (concentration 0.02 mol/L) to adjust the pH to 5, after which Ni particles were added, and the mixture was reduced (adding hydrogen peroxide). In a similar manner to that of sample 1, analytical methods such as SEM, TEM, and XRD confirmed that Ir particles with an average particle diameter of 20 nm were attached to the Ni particles.

### Sample 6

A fuel cell as shown in FIG. 1 was fabricated in a similar manner to that of sample 1.

However, an aqueous solution of sodium hexachloroiridate ― ruthenium chloride (atomic composition ratio of Ir to Ru is 5:5) was used instead of the aqueous solution of chloroplatinic acid. The aqueous solution of sodium hexachloroiridate - ruthenium chloride was prepared by adding an aqueous solution of sodium hydroxide to an aqueous solution of sodium hexachloroiridate (concentration 0.02 mol/L) to adjust the pH to 5, after which an aqueous solution of ruthenium chloride (concentration 0.02 mol/L) was added. It should be noted that in a similar manner to that of sample 1, analytical methods such as SEM, TEM, and XRD confirmed that IrRu alloy particles with an average particle diameter of 20 nm were attached to the Ni particles, which are the metal particles.

### Sample 7

A fuel cell as shown in FIG. 1 was fabricated in a similar manner to that of sample 1.

However, an aqueous solution of sodium hexachloroiridate - tin acetate (atomic composition ratio of Ir to Sn is 5:5) was used instead of the aqueous solution of chloroplatinic acid. The aqueous solution of sodium hexachloroiridate - tin acetate was prepared by adding an aqueous solution of sodium hydroxide to the aqueous solution of sodium hexachloroiridate to adjust the pH to 5, after which an aqueous solution of tin acetate (concentration 0.02 mol/L) was added. It should be noted that in a similar manner to that of sample 1, analytical methods such as SEM, TEM, and XRD confirmed that IrSn alloy particles with an average particle diameter of 20 nm were attached to the Ni particles, which are the metal particles.

### Sample 8

A fuel cell as shown in FIG. 1 was fabricated in a similar manner to that of sample 1.

However, an aqueous solution of sodium hexachloroiridate - tungstic acid (atomic composition ratio of Ir to W is 5:5) was used instead of the aqueous solution of chloroplatinic acid. The aqueous solution of sodium hexachloroiridate - tungstic acid was prepared by adding an aqueous solution of sodium hydroxide to an aqueous solution of sodium hexachloroiridate to adjust the pH to 5, after which an aqueous solution of tungstic acid (concentration: 0.02 mol/L) was added. It should be noted that in a similar manner to that of sample 1, analytical methods such as SEM, TEM, and XRD confirmed that IrW alloy particles with an average particle diameter of 20 nm were attached to the Ni particles which are the metal particles.

### Sample 9

A fuel cell as shown in FIG. 1 was fabricated in a similar manner to that of sample 1.

However, an aqueous solution of rhodium chloride (manufactured by Kanto Kagaku) was used instead of the aqueous solution of chloroplatinic acid. Rh - attached Ni particles were obtained by adding an aqueous solution of sodium hydroxide to an aqueous solution of rhodium chloride (concentration: 0.02 mol/L) to adjust the pH to 5, after which Ni particles were added, and the mixture was reduced (adding hydrogen peroxide). In a similar manner to that of sample 1, analytical methods such as SEM, TEM, and XRD confirmed that Rh particles with an average particle diameter of 20 nm were attached to the Ni particles.

### Sample 10

A fuel cell as shown in FIG. 1 was fabricated in a similar manner to that of sample 1.

However, an aqueous solution of palladium nitrate (manufactured by Kanto Kagaku) was used instead of the aqueous solution of chloroplatinic acid. Pd - attached Ni particles were obtained by adding an aqueous solution of sodium hydroxide to an aqueous solution of palladium nitrate (concentration: 0.02 mol/L) to adjust the pH to 5, after which Ni particles were added, and the mixture was reduced (adding hydrogen peroxide). In a similar manner to that of sample 1, analytical methods such as SEM, TEM, and XRD confirmed that Pd particles with an average particle diameter of 20 nm were attached to the Ni particles.

### Sample 11

A fuel cell as shown in FIG. 1 was fabricated in a similar manner to that of sample 1.

However, an aqueous solution of silver acetate (manufactured by Kanto Kagaku) was used instead of the aqueous solution of chloroplatinic acid solution. Ag - attached Ni particles were obtained by adding an aqueous solution of sodium hydroxide to an aqueous solution of silver acetate (concentration: 0.02 mol/L) to adjust the pH to 5, after which Ni particles were added, and the mixture was reduced (adding hydrogen peroxide). In a similar manner to that of sample 1, analytical methods such as SEM, TEM, and XRD confirmed that Ag particles with an average particle diameter of 20 nm were attached to the Ni particles.

### Sample 12

A fuel cell as shown in FIG. 1 was fabricated in a similar manner to that of sample 1.

However, an aqueous solution of chloroauric acid (manufactured by Tanaka Kikinzoku Kogyo K. K.) was used instead of the aqueous solution of chloroplatinic acid. Au - attached Ni particles were obtained by adding an aqueous solution of sodium hydroxide to an aqueous solution of the chloroauric acid (concentration: 0.02 mol/L) to adjust the pH to 5, after which Ni particles were added, and the mixture was reduced (adding hydrogen peroxide). In a similar manner to that of sample 1, analytical methods such as SEM, TEM, and XRD confirmed that Au particles with an average particle diameter of 20 nm were attached to the Ni particles.

### Sample 13

A fuel cell as shown in FIG. 1 was fabricated in a similar manner to that of sample 1.

However, Co particles with an average particle diameter of 1 µm were used as the metal particles instead of the Ni particles. It should be noted that in a similar manner to that of sample 1, analytical methods such as SEM, TEM, and XRD confirmed that the Pt particles with an average particle diameter of 20 nm were attached to the Co particles, which are the metal particles.

### Sample 14

A fuel cell as shown in FIG. 1 was fabricated in a similar manner to that of sample 1.

However, Fe particles with an average particle diameter of 1 µm were used as the metal particles instead of the Ni particles. It should be noted that in a similar manner to that of sample 1, analytical methods such as SEM, TEM, and XRD confirmed that the Pt particles with an average particle diameter of 20 nm were attached to the Fe particles, which are the metal particles.

### Sample 15

A fuel cell as shown in FIG. 1 was fabricated in a similar manner to that of sample 1.

However, Ce_{0.9}La_{0.1}O₂ particles with an average particle diameter of 1 µm were used instead of the Ce_{0.9}Gd_{0.1}O₂ particles that were used in fabricating the anode. The average pore diameter of the anode was similar to sample 1.

### Sample 16

A fuel cell as shown in FIG. 1 was fabricated in a similar manner to that of sample 1.

However, Ce_{0.8}Sm_{0.2}O₂ particles with an average particle diameter of 1µm were used instead of the Ce_{0.9}Gd_{0.1}O₂ particles that were used in fabricating the anode. The average pore diameter of the anode was similar to sample 1.

### Sample 17

A fuel cell as shown in FIG. 1 was fabricated in a similar manner to that of sample 1.

However, BaZr_{0.6}Ce_{0.2}Gd_{0.2}O₃ particles with an average particle diameter of 1 µm were used instead of the Ce_{0.9}Gd_{0.1}O₂ particles that were used in fabricating the anode. The average pore diameter of the anode was similar to sample 1.

### Sample 18

A fuel cell as shown in FIG. 1 was fabricated in a similar manner to that of sample 1.

However, La_{0.8}Sr_{0.2}Ga_{0.9}Mg_{0.05}Co_{0.05}O₃ particles with an average particle diameter of 1 µm were used instead of the Ce_{0.9}Gd_{0.1}O₂ particles that were used in fabricating the anode. The average pore diameter of the anode was similar to sample 1.

### Sample 19

A fuel cell as shown in FIG. 1 was fabricated in a similar manner to that of sample 1.

However, Pt - attached Ni particles were fabricated by adding an aqueous solution of sodium hydroxide to an aqueous solution of chloroplatinic acid (concentration 0.02 mol/L) to adjust the pH to 5, and adding Ni particles, after which the time for reduction was adjusted, to vary the average particle diameter of Pt particles that attach to Ni particles to 2nm, 20nm, and 400nm. It should be noted that in a similar manner to that of sample 1, analytical methods such as SEM, TEM, and XRD confirmed the average particle diameter.

### Sample 20 (comparative example)

A fuel cell disclosed in the reference A described above was fabricated as sample 20, which is a comparative example. More specifically, a porous cermet made from Ni particles and Gd_{0.1}Ce_{0.9}O_{1.95} particles with an average particle diameter of 1 µm was used as an anode, and Gd_{0.1}Ce_{0.9}O_{1.95} oxide with a thickness of 20 µm was used as an electrolyte (a first solid oxide). Furthermore, a porous membrane made from Sm_{0.5}Sr_{0.5}CO₃ and Gd_{0.1}Ce_{0.9}O_{1.95} was used as a cathode. The manufacturing method was carried out according to the reference A. Variables such as the materials of other members and the size of the electrolyte, the anode and the cathode are the same as the samples 1 to 19.

Electrical power actually was generated with the samples thus fabricated, using hydrogen as the fuel and air as the oxidizing agent. Furthermore, when generating power, the power generation temperatures were set to be 400°C and 600°C, and the utilization factor of the anode was 70% and that of the cathode was 40%. FIG. 4 shows the result of the power generation characteristics of sample 1 and sample 20 (comparative example).

As FIG. 4 shows, the result of sample 1 is power generation characteristics that are superior to that of sample 20, which is the comparative example. In particular, when the power generation temperature was 400°C, the degree of power output reduction was significantly less in sample 1 than the large reduction of the output of sample 20. It seems that the decrease of catalytic activity at low temperatures can be suppressed more in sample 1 than in sample 20.

In a similar manner, table 1 below shows the results of the power generated with sample 1 to sample 18 and sample 20. Table 1 shows the maximum output (W/cm²) at the power generation temperatures.

**Table 1**

| Sample No. | Maximum output at 600°C (W/cm²) | Maximum output at 400°C (W/cm²) |
|---|---|---|
| 1 | 0.41 | 0.2 |
| 2 | 0.5 | 0.27 |
| 3 | 0.49 | 0.26 |
| 4 | 0.47 | 0.24 |
| 5 | 0.41 | 0.2 |
| 6 | 0.49 | 0.2 |
| 7 | 0.5 | 0.22 |
| 8 | 0.45 | 0.2 |
| 9 | 0.41 | 0.18 |
| 10 | 0.41 | 0.18 |
| 11 | 0.38 | 0.1 |
| 12 | 0.39 | 0.18 |
| 13 | 0.41 | 0.2 |
| 14 | 0.41 | 0.2 |
| 15 | 0.4 | 0.2 |
| 16 | 0.4 | 0.2 |
| 17 | 0.41 | 0.25 |
| 18 | 0.4 | 0.2 |
| 20 | 0.38 | 0.03 |

As Table 1 shows, substantially similar results to sample 1 were obtained with sample 2 to sample 18.

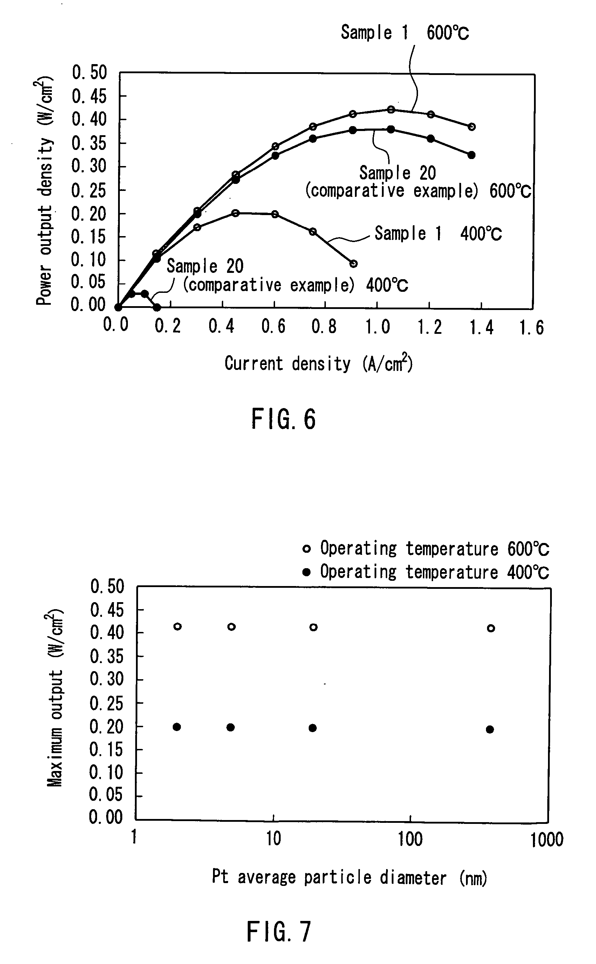

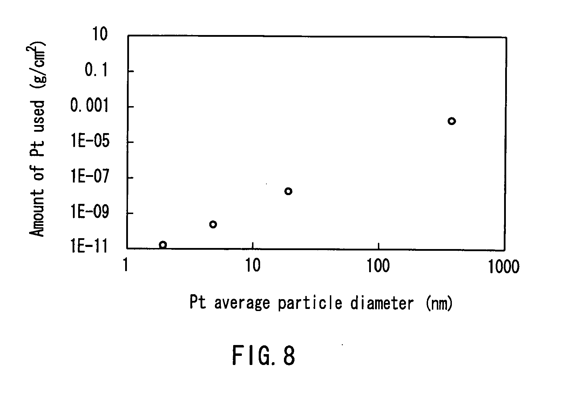

Next, FIG. 7 shows the results of the maximum output (at power generation temperatures of 400°C and 600°C) for sample 1 (Pt particles with an average particle diameter of 5 nm) and sample 19 (Pt particles with average particle diameters of 2 nm, 20nm, and 400nm). FIG. 8 shows the amount of Pt particles used in the anode for sample 1 and sample 19.

It was found that substantially similar power generation characteristics were obtained for Pt particles with average particle diameters in a range of 2 nm to 400 nm, which are attached to the surface of metal particles as the anode catalyst, as shown in FIG. 7. It has been found from this result that in a range of power generation temperatures 400°C to 600°C, the catalytic activity of Pt particles, which is the anode catalyst, does not depend on the average particle diameter. Although the reason for this is unclear, it seems that because hydrogen atoms easily move across the surface of metal particles, catalytic activity is high even with a small surface area, compensating for the decrease of the surface area of the Pt particles. Furthermore, it has been found that even as the average particle diameter of Pt particles becomes smaller, the amount of Pt particles used can be reduced while maintaining the power generation characteristics as shown in FIG. 8. It seems that this phenomenon occurs because locations on which Pt particles attach onto metal particles does not increase even with the passing of reaction time. There is a tendency that if the reaction time is increased, then the attachment of new Pt particles seems to be suppressed while the generated Pt particles grow. Thus, the number of Pt particles attached to metal particles is almost the same even when the average particle diameter of Pt particles is increased, and thus seems to be the reason why the amount of Pt used can be suppressed.

The invention may be embodied in other forms without departing from the spirit or essential characteristics thereof. The embodiments disclosed in this description are to be considered in all respects as illustrative and not limiting. The scope of the invention is indicated by the appended claims rather than by the foregoing description, and all changes which come within the meaning and range of equivalency of the claims are intended to be embraced therein.

### INDUSTRIAL APPLICABILITY

As described above, with the present invention, it is possible to provide a solid oxide fuel cell with superior power generation characteristics even at lower temperatures (for example, in a range of 200°C to 600°C and preferably in a range of 400°C to 600°C) and methods for manufacturing the same. Furthermore, because of these characteristics, the solid oxide fuel cell of the present invention can be used as a power source with many uses, such as a power source for automobiles or a power source for mobile phones.

## Claims

1. A solid oxide fuel cell comprising:
an anode, a cathode and a first solid oxide held between the anode and the cathode;
wherein the anode includes metal particles, an anode catalyst and ion conducting bodies; and
wherein the anode catalyst is attached to the surface of the metal particles.

2. The solid electrolyte fuel cell according to claim 1,
wherein the composition of the metal particles and the composition of the anode catalyst differs.

3. The solid oxide fuel cell according to claim 1,
wherein the anode catalyst includes at least one element selected from Pt, Ir, Rh, Pd, Ag and Au.

4. The solid oxide fuel cell according to claim 1,
wherein the anode catalyst includes at least one alloy selected from PtRu, PtSn, PtRe, PtOs, PtW, IrRu, IrSn and IrW.

5. The solid oxide fuel cell according to claim 1,
wherein the average particle diameter of the anode catalyst is in a range of 2 nm to 400 nm.

6. The solid oxide fuel cell according to claim 1,
wherein the metal particles include at least one element selected from Ni, Co and Fe.

7. The solid oxide fuel cell according to claim 1,
wherein the average particle diameter of the metal particles is larger than the average particle diameter of the anode catalyst.

8. The solid oxide fuel cell according to claim 1,
wherein the ion conducting bodies are a second solid oxide.

9. The solid oxide fuel cell according to claim 8,
wherein the second solid oxide includes Ce.

10. The solid oxide fuel cell according to claim 9,
wherein the second solid oxide has a composition expressed by the formula Ce₁₋ₓMₓO_{2-α},
where, M is at least one element selected from Gd, La and Sm, and x and α are values satisfying the following relationships: 0 < x < 1 and 0 < α < 2.

11. The solid oxide fuel cell according to claim 9,
wherein the second solid oxide has a composition expressed by the formula Ba (Zr_{1·x'}Ce_{x'})_{1-y'}Gd_{y'}O_{3·α},
where, x', y' and α are values satisfying the following relationships: 0 <x'< 1,0<y'< 1 and 0 ≤ α < 3.

12. The solid oxide fuel cell according to claim 8,
wherein the second solid oxide has a composition expressed by the formula La_{x"}Sr_{1-x"}Ga_{y"}Mg_{1-y"-z}CO_{z}O_{3-α},
where, x", y", z and α are values satisfying the following relationships: 0 < x" < 1, 0 < y" < 1, 0 < z < 1 and 0 < α < 3.

13. The solid oxide fuel cell according to claim 8,
wherein the composition of the first solid oxide and the composition of the second solid oxide differ from one another.

14. A solid oxide fuel cell comprising:
an anode, a cathode and a first solid oxide held between the anode and the cathode;
wherein the anode includes ion conducting bodies and a plurality of types of metal particles, whose range of particle diameter distribution differs from one another;
wherein at least one type of metal particles, selected from the plurality of types of the metal particles, is attached to the surface of other metal particles; and
wherein the at least one type of metal particles attached to the surface is an anode catalyst.

15. The solid oxide fuel cell according to claim 14,
wherein the average particle diameter of the at least one type of metal particles, of the plurality of types of the metal particles, is smaller than the average particle diameter of other metal particles.

16. The solid oxide fuel cell according to claim 14,
wherein the average particle diameter of the at least one type of metal particles is in a range of 2 nm to 400 nm.

17. A method for manufacturing a solid oxide fuel cell comprising an anode containing an anode catalyst, a cathode, and a first solid oxide held between the anode and the cathode, the method comprising:
(i) a step of forming metal particles to which an element is attached, by adding the metal particles to a first solution that contains a compound of the element that becomes the anode catalyst, and then reducing the compound to deposit the element on the surface of the metal particles;
(ii) a step of forming a thin membrane that contains the metal particles and ion conducting bodies; and
(iii) a step of forming the anode containing the anode catalyst from the thin membrane, by disposing the thin membrane, the cathode, and the first solid oxide such that the first solid oxide is held between the thin membrane and the cathode, to form a laminated body, and heating the laminated body thus formed.

18. The method for manufacturing a solid oxide fuel cell according to claim 17,
wherein the ion conducting bodies are a second solid oxide.

19. The method for manufacturing a solid oxide fuel cell according to claim 17,
wherein the compound of the element that becomes the anode catalyst is at least one selected from chloroplatinic acid, ruthenium chloride, tin acetate, tungstic acid, sodium hexachloroiridate, rhodium chloride, palladium nitrate, silver acetate and chloroauric acid.

20. The method for manufacturing a solid oxide fuel cell according to claim 17,
wherein the metal particles include at least one element selected from Ni, Co, and Fe.

21. The method for manufacturing a solid oxide fuel cell according to claim 18,
wherein the step (ii) includes a step (a) of forming a thin membrane containing the metal particles and the second solid oxide, by adding the metal particles to a second solution containing the compound of the element that becomes the second solid oxide, and removing the solvent in the second solution, and then performing heating.

22. The method for manufacturing a solid oxide fuel cell according to claim 21,
wherein the compound of the element that becomes the second solid oxide is at least one selected from cerium acetate, lanthanum chloride, samarium chloride, barium acetate, zirconium sulfate and gadolinium chloride.

23. A method for manufacturing a solid oxide fuel cell comprising an anode containing anode catalyst, a cathode, and a first solid oxide held between the anode and the cathode, the method comprising:
(I) a step of forming metal particles to which an element is attached by adding the metal particles to a solution that contains a compound of the element that becomes the anode catalyst, and then reducing the compound to deposit the element on the surface of the metal particles;
(II) a step of forming a thin membrane that contains the metal particles and ion conducting bodies;
(III) a step of forming the anode containing the anode catalyst from the thin membrane by heating the thin membrane; and
(IV) a step of laminating the anode, the cathode, and the first solid oxide such that the first solid oxide is held between the anode that is formed and the cathode.
